# EUROPÄISCHE PATENTSCHRIFT

(11) **EP 2 657 583 B1**
(45) Veröffentlichungstag und Bekanntmachung des Hinweises auf die Patenterteilung: **24.12.2014**
(21) Anmeldenummer: 13162420.7
(22) Anmeldetag: 05.04.2013
(51) Int. Cl.: F16K 1/226

(54) **Drei-fach-exzentrische Absperrarmatur**
Three compartment eccentric shut-off valve
Armature d'arrêt triplement excentrique

(30) Priorität: 27.04.2012 DE 102012103726
(43) Veröffentlichungstag der Anmeldung: 30.10.2013
(73) Patentinhaber: Metso Automation MAPAG GmbH, 86497 Horgau (DE)
(72) Erfinder: Wagner, Christian, 86391 Stadtbergen (DE)
(74) Vertreter: Geirhos, Johann

(56) Entgegenhaltungen:
- DE-A1- 10 250 774
- GB-A- 1 536 837
- US-A1- 2007 215 834

## Beschreibung

Die Erfindung betrifft eine Absperrarmatur mit einem Gehäuse, einem zwischen einer Absperrscheibe und dem Gehäuse ausgebildeten Ventilsitz, wobei die Absperrscheibe im Gehäuse um eine senkrecht zur Längsachse des Gehäuses angeordnete Drehachse zwischen einer Öffnungsstellung und einer Sperrstellung beidseitig drehbar gelagert ist, wobei an dem Ventilsitz ein metallisches Dichtsystem ausgebildet ist, das in beide Druckrichtungen abdichtet, und wobei die Absperrscheibe zweifach-exzentrisch in dem Gehäuse gelagert ist, wobei eine erste Exzentrizität von einer Beabstandung der Absperrscheibe von der Drehachse in Längsrichtung der Längsachse der Absperrarmatur gebildet ist und eine zweite Exzentrizität von einer seitlichen, senkrecht zur Längsachse angeordneten Beabstandung der Drehachse der Absperrscheibe von der Längsmittelachse des Gehäuses gebildet ist, und eine dritte Exzentrizität von einem kegelförmigen Ventilsitz gebildet ist, wobei die Kegelspitze von der Längsachse des Gehäuses beabstandet ist.

Eine derartige drei-fach-exzentrische Absperrarmatur ist aus der DE 102 50 774 A1 bekannt. Um eine Abdichtung in beiden Druckrichtungen zu erzielen, ist es bereits aus dieser Druckschrift bekannt, entweder an der Absperrscheibe oder am Gehäuse eine Metalldichtung als metallisches Dichtsystem anzuordnen.

Aus der US 2007/0215834 A1 ist in der Figur 2 eine drei-fach-exzentrische Absperrarmatur bekannt, bei der ein Dichtring an der Absperrscheibe angeordnet ist, der mit einem Ventilsitz im Gehäuse zusammenwirkt.

Die GB 1 536 837 A offenbart eine drei-fach-exzentrische Absperrarmatur mit einem metallischen Dichtung, der im Gehäuse angeordnet ist und mit der Absperrscheibe zusammenwirkt.

Für derartige Absperrarmaturen mit einem metallischen Dichtsystem am Ventilsitz zwischen dem Gehäuse und der Absperrscheibe werden zunehmend sehr hohe Dichtanforderungen in beide Druckrichtungen gestellt. Bei drei-fach-exzentrischen Absperrarmaturen ist es bereits bekannt, als Dichtsystem an der Absperrscheibe oder im Gehäuse ein Lamellendichtsystem mit mehreren ringartigen Dichtlippen vorzusehen. Eine derartige Absperrarmatur ist beispielsweise aus der EP 0 979 367 B1 bekannt.

Derartige Lamellendichtsysteme erzielen ihre Dichtwirkung durch mehrfach hintereinander geschaltete scharfkantige metallische Dichtlippen, die mit hohen Kräften gegen die Dichtfläche an dem Gehäuse bzw. der Absperrscheibe gepresst werden. Dieses Dichtsystem unterliegt allerdings einem Verschleiß, insbesondere einem Verschleiß an dem mit den scharfkantigen Dichtlippen zusammenwirkenden Dichtflächen an der Absperrscheibe bzw. am Gehäuse, so dass nach einer gewissen Anzahl von Schaltvorgängen der Absperrscheibe die Dichtwirkung nachlässt.

Alternativ zu derartigen Lamellendichtsystemen sind bereits Dichtsystem mit speziell geformten ringförmigen Dichtelementen bekannt, beispielsweise U-förmigen metallischen Dichtelementen, die senkrecht zur Längsachse des Gehäuses im Gehäuse eingebaut werden. Derartige Dichtelemente erzielen über eine Aufweiten eine Dichtkraft an der Oberfläche der Absperrscheibe. Mit derartigen Dichtelementen können hohe Dichtigkeiten durch in den Ventilsitz wirkende Prozessdrücke realisiert werden. Derartige Dichtsysteme haben jedoch den Nachteil, dass sich bei einem Druck aus dem Ventilsitz die Dichtfläche der Absperrscheibe durch Verformungen der Absperrscheibe und der Lagerwelle der Absperrscheibe von dem Dichtelement wegbewegt, das im Gehäuse fixiert und befestigt ist. Ab einem bestimmten Druck kann somit keine Dichtigkeit mehr gewährleistet werden.

Der vorliegenden Erfindung liegt die Aufgabe zugrunde, eine Absperrarmatur der eingangs genannten Gattung zur Verfügung stellen, die mit geringem Bauaufwand eine hohe Dichtigkeit ermöglicht.

Diese Aufgabe wird erfindungsgemäß dadurch gelöst, dass das metallische Dichtsystem von zwei metallischen Dichtringen gebildet ist, wobei ein Dichtring im Gehäuse und ein weiterer Dichtring an der Absperrscheibe angeordnet sind. Die Anordnung eines metallischen Dichtringes an der Absperrscheibe und eines weiteren metallischen Dichtringes im Gehäuse ermöglicht es in Verbindung mit der drei-fach exzentrischen Anordnung, dass zwei als Dichtringe ausgebildete Dichtelemente über eine jeweils dreifach exzentrische Geometrie eingesetzt sind, so dass nahezu verschleißfreie Öffnungs- und Schließvorgänge der Absperrscheibe erzielt werden, die eine hohe Dichtigkeit der Absperrarmatur in beiden Druckrichtungen bei geringem Herstellaufwand und Bauaufwand ermöglicht.

Gemäß einer vorteilhaften Ausführungsform der Erfindung ist an dem Gehäuse eine Kegelfläche des Ventilsitzes und an der Absperrscheibe eine Kegelfläche des Ventilsitzes ausgebildet, wobei in der Sperrstellung der Absperrscheibe der an der Absperrscheibe angeordnete Dichtring mit der Kegelfläche des Gehäuses zusammenwirkt und der im Gehäuse angeordnete Dichtring mit der Kegelfläche an der Absperrscheibe zusammenwirkt. Bei der erfindungsgemäßen Absperrarmatur wird somit erzielt, dass der an der Absperrscheibe montierte Dichtring beim Betätigen der Absperrscheibe in die Sperrstellung in die eine Dichtfläche des Ventilsitzes bildende Kegelfläche am Gehäuse einschwenkt, während gleichzeitig die Absperrscheibe mit einer von der Kegelfläche gebildeten Dichtfläche des Ventilsitzes zu dem weiteren im Gehäuse montierten Dichtring einschwenkt. Durch die beiden Dichtringe, die getrennt und abwechselnd voneinander im Gehäuse bzw. auf der Absperrscheibe montiert sind und mit entsprechenden Kegelflächen an der Absperrscheibe bzw. im Gehäuse zusammenwirken, kann somit eine hohe Dichtigkeit in beiden Richtungen erzielt werden. In Verbindung mit der drei-fach-exzentrischen Ausführung der Absperrarmatur kann hierdurch ein nahezu verschleißfreier Betrieb und nahezu verschleißfreie Öffnungs- und Schließvorgänge der Absperrscheibe erzielt werden.

Mit besonderen Vorteilen dichtet gemäß einer Ausführungsform der Erfindung der an der Absperrscheibe angeordnete Dichtring zu einer ersten Druckrichtung ab und der im Gehäuse angeordnete Dichtring zu einer zweiten Druckrichtung ab. Mit einer derartigen Auslegung der beiden Dichtringe, wobei jeder Dichtring in jeweils eine Druckrichtung abdichtet, kann auf einfache Weise in beiden Druckrichtungen eine hohe Dichtigkeit sichergestellt werden.

Besondere Vorteile ergeben sich, wenn gemäß einer vorteilhaften Ausgestaltung der Erfindung der Dichtring jeweils zu der zugeordneten Druckrichtung offen ist, so dass der anstehende Druck dichtverstärkend wirkt. Mit derartigen Dichtringen, die auf einer Seite den in der zugeordneten Druckrichtung anstehenden Druck einlassen, um die Wirkung zu verstärken, wird in besonders vorteilhafter Weise erzielt, dass die Dichtwirkung der Dichtringe durch den Druck in der entsprechenden Druckrichtung und die anstehende Druckdifferenz verstärkt wird. Mit derartigen Dichtringen wird somit erzielt, dass der an dem enstprechenden Dichtring anstehende Druck jeweils dichtungsverstärkend wirkt, wodurch die Absperrscheibe mit geringen Antriebsmomenten in die Sperrstellung betätigt werden kann. Die Dichtwirkung der Dichtringe benötigt daher kein zusätzliches Antriebsmoment an der Absperrscheibe, wodurch eine kostengünstige Auslegung des erforderlichen Antriebs der Absperrscheibe erzielt wird.

Als Dichtringe können beliebige Geometrie der Dichtringe vorgesehen werden, die durch den in der zugeordneten Druckrichtung anstehende Druck dichtungsverstärkend wirken. Gemäß einer bevorzugten Ausführungsform der Erfindung sind die Dichtringe als einseitig offene Dichtringe ausgebildet. Mit derartigen, einseitig offenen Dichtringen wird auf einfache Weise ermöglicht, dass der an der entsprechenden Druckseite anstehende Druck und somit die anstehenden Druckdifferenz dichtungsverstärkend wirkt.

Derartige einseitig offene Dichtringe können gemäß einer bevorzugten Ausgestaltung der Erfindung als Dichtringe mit einem als C-Profil oder einem U-Profil aufweisenden Querschnitt versehen sein. Derartige Dichtringe weisen einen geringen Herstellungsaufwand auf. Derartige Dichtringe können auch mit einer zusätzlichen Federeinrichtung, beispielsweise einer innen liegenden Spiralfeder, versehen sein, wodurch eine hohe Dichtigkeit auch bei geringen anstehenden Drücken erzielt wird.

Die dichtungsverstärkende Wirkung durch den an der entsprechenden Druckrichtung anstehenden Druck wird bei derartigen Dichtringen auf einfache Weise erzielt, wenn der als C- oder U-förmiger Dichtring mit einer Querschnittsaussparung zur zugeordneten Druckseite hin offen eingebaut ist. Mit einer beispielsweise liegenden Anordnung derartiger Dichtringe kann die verstärkende Wirkung auf einfache Weise erzielt werden.

Gemäß einer alternativen Ausgestaltung der Erfindung können die Dichtringe als geschlossene, im Querschnitt O-förmige Dichtringe ausgebildet sein.

Bei derartigen O-förmige und hohlen Dichtringen kann eine dichtungsverstärkende Wirkung durch den an der entsprechenden Druckrichtung anstehenden Druck auf einfache Weise erzielt werden, wenn die Dichtringe jeweils zumindest eine Anschlussöffnung zur Verbindung des Innenraums des Dichtringes mit der zugeordneten Druckrichtung aufweisen.

Bei einem Dichtring mit einem O-förmigen Querschnitt kann eine dichtungsverstärkende Wirkung ebenfalls erzielt werden, wenn der Dichtring geschlossen ist und einen mit Gas gefüllten Innenraum aufweist, der bei einem Temperaturanstieg durch eine Expansion des Gasvolumens dichtungsverstärkend wirkt.

Eine einfache Befestigung des Dichtrings an der Absperrscheibe ist erzielbar, wenn gemäß einer bevorzugten Ausführungsform der Erfindung die Absperrscheibe einen zweigeteilten Aufbau aufweist, wobei der an der Absperrscheibe angeordnete Dichtring mittels einer Klemmbefestigung an der Absperrscheibe befestigt ist.

Eine einfache Befestigung des Dichtrings im Gehäuse ist erzielbar, wenn gemäß einer bevorzugten Ausführungsform der Erfindung der an dem Gehäuse angeordnete Dichtring an dem Gehäuse mittels einer Klemmbefestigung befestigt ist.

Weitere Vorteile und Einzelheiten der Erfindung werden anhand der in den schematischen Figuren dargestellten Ausführungsbeispiele näher erläutert. Hierbei zeigt
- Figur 1: eine erfindungsgemäße Absperrarmatur in einem Längsschnitt,
- Figur 2: einen Ausschnitt der Figur 1 mit einer Stellung der Absperrscheibe kurz vor Erreichen der Sperrstellung und
- Figur 3: einen Ausschnitt der Figur 1 mit einer in der Sperrstellung befindlichen Absperrscheibe.

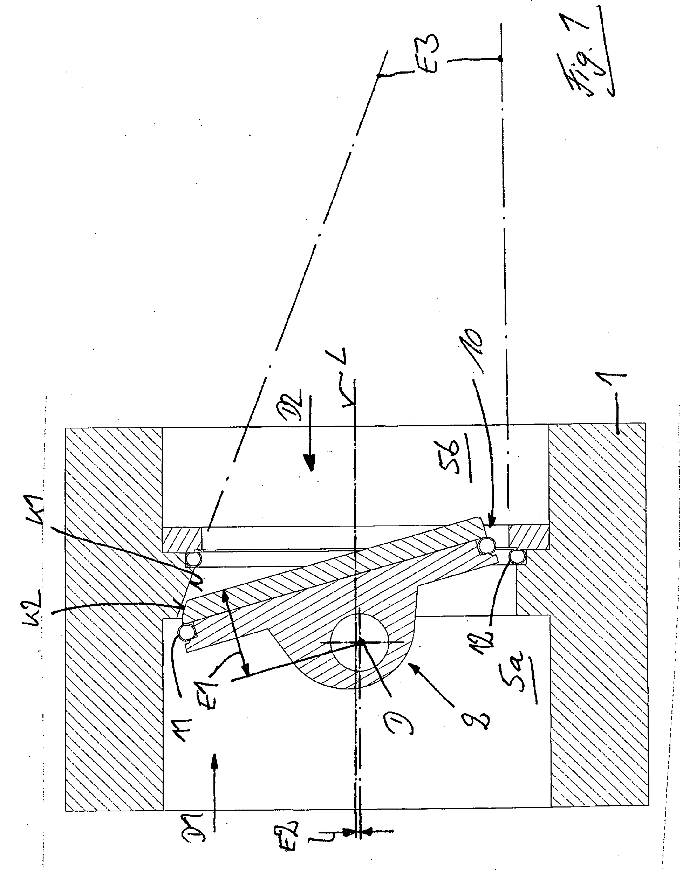

In den Figuren 1 bis 3 ist eine erfindungsgemäße Absperrarmatur in einem Längsschnitt gezeigt.

Die Absperrarmatur weist ein Gehäuse 1 auf, in dem eine Absperrscheibe 2 um eine senkrecht zur Längsachse L des Gehäuses 1 angeordnete Drehachse D drehbar gelagert ist.

Zwischen dem Gehäuse 1 und der um die Drehachse D schwenkbaren Absperrscheibe 2 ist ein Ventilsitz V ausgebildet.

Die Absperrscheibe 2 zwischen einer Öffnungsstellung einer Sperrstellung um die Drehachse D verschwenkbar. In der Öffnungsstellung der Absperrscheibe 2 ist die Absperrarmatur in Längsrichtung der Längsachse L von Medium durchströmbar ist. In der Sperrstellung der Absperrscheibe 2 sperrt die Absperrscheibe 2 einen ersten Druckraum 5a von einem zweiten Druckraum 5b, so dass die Absperrarmatur in beiden Druckrichtungen D1, D2 dicht ist.

Die erfindungsgemäße Absperrarmatur ist drei-fach-exzentrisch. Die Absperrscheibe 2 ist hierzu doppelt-exzentrisch im Gehäuse 1 angeordnet. Hierzu ist die Absperrscheibe 2 von der Drehachse D - wie in der Figur 1 ersichtlich ist - in Längsrichtung der Längsachse L der Absperrarmatur beabstandet, wodurch eine erste Exzentrizität E1 gebildet ist. Durch eine seitliche, senkrecht zur Längsachse L angeordnete Beabstandung der Drehachse D der Absperrscheibe 2 von der Längsmittelachse L des Gehäuses 1 wird eine zweite Exzentrizität E2 gebildet. Eine dritte Exzentrizität E3 ist von einem als Kegelfläche ausgebildeten Ventilsitz V gebildet, wobei die Spitze der Kegelfläche von der Längsachse L in seitlicher Richtung beanstandet ist. Der Ventilsitz V ist von einer entsprechenden schiefen Kegelfläche K1 und somit einem schiefen Kegel im Gehäuse 1 und einer schiefen Kegelfläche K2 und somit einem schiefen Kegel an der Absperrscheibe 2 gebildet. Die dritte Exzentrizität E3 ist somit zweifach vorhanden und wird somit von der Kegelfläche K1 im Gehäuse 1 und der Kegelfläche K2 an der Absperrscheibe 2 gebildet.

Bei der erfindungsgemäßen Absperrarmatur ist im Bereich des Ventilsitzes V ein metallisches Dichtsystem 10 ausgebildet, das in beide Druckrichtungen D1 und D2 abdichtet.

Das metallische Dichtsystem 10 umfasst erfindungsgemäß zwei metallische Dichtringe 11, 12, wobei der Dichtring 11 an der Absperrscheibe 2 angeordnet ist. Der Dichtring 12 ist im Gehäuse 1 angeordnet.

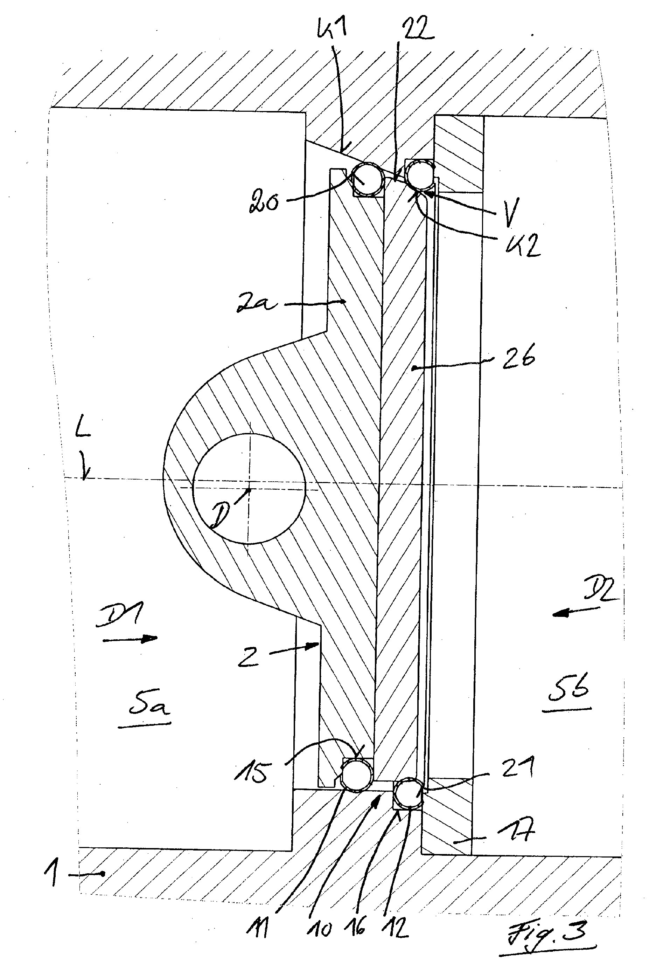

In der in der Figur 3 dargestellten Sperrstellung der Absperrscheibe 2 wirkt der an der Absperrscheibe 2 angeordnete Dichtring 11 mit der Kegelfläche K1 des Gehäuses 2 zusammen. Entsprechend wirkt in der Sperrstellung der Absperrscheibe 2 der im Gehäuse 2 angeordnete Dichtring 12 mit der Kegelfläche K2 an der Absperrscheibe 2 zusammen.

Zur Befestigung des Dichtrings 11 an der Absperrscheibe 2 weist die Absperrscheibe einen zweiteiligen Aufbau mit einem Grundkörper 2a und einer an dem Grundkörper 2a befestigbaren Klemmscheibe 2b, wobei der Dichtring 11 zwischen dem Grundkörper 2a und der Klemmscheibe 2b mittels einer Klemmbefestigung eingeklemmt ist. Der Grundkörper 2a ist hierzu mit einer Aufnahmenut 15 zur Aufnahme des Dichtrings 11 versehen. Die Kegelfläche K2 ist an der Klemmscheibe 2b ausgebildet.

Zur Befestigung des Dichtring 12 im Gehäuse 1 ist eine Klemmbefestigung vorgesehen. Im Gehäuse 1 ist zur Aufnahme des Dichtringes 12 eine Aufnahmenut 16 vorgesehen, wobei die Befestigung des Dichtrings 12 in der Aufnahmenut 16 mittels eines in dem Gehäuse 1 befestigbaren Klemmringes 17 erfolgt.

Der an der Absperrscheibe 2 angeordnete Dichtring 11 dient zur Abdichtung in Druckrichtung D1. Der im Gehäuse 1 angeordnete Dichtring 12 dient zur Abdichtung in Druckrichtung D2.

Die Dichtringe 11 bzw. 12 sind jeweils zur zugeordneten Druckrichtung D1 bzw. D2 offen, so dass der in dem entsprechenden Druckraum 5a bzw. 5b anstehende Druck dichtverstärkend wird.

Im dargestellten Ausführungsbeispiel sind die Dichtringe 11, 12 als einseitig offene Dichtringe ausgebildet, die im Querschnitt ein C-förmiges Profil aufweisen.

Der an der Absperrscheibe 2 angeordnete Dichtring 11 ist mit einer Querschnittsaussparung 20 zu dem ersten Druckraum 5a offen eingebaut, so dass der Dichtring 11 selbstverstärkend bei Druck in dem ersten Druckraum 5a und somit in erster Druckrichtung D1 wirkt. Der Dichtring 11 ist somit zum zweiten Druckraum 5b geschlossen.

Der im Gehäuse 2 angeordnete Dichtring 12 ist mit einer Querschnittsaussparung 21 zu dem zweiten Druckraum 5b offen eingebaut, so dass der Dichtring 12 selbstverstärkend bei Druck in dem zweiten Druckraum 5b und somit in zweiter Druckrichtung D2 wirkt. Der Dichtring 12 ist somit zum ersten Druckraum 5a geschlossen.

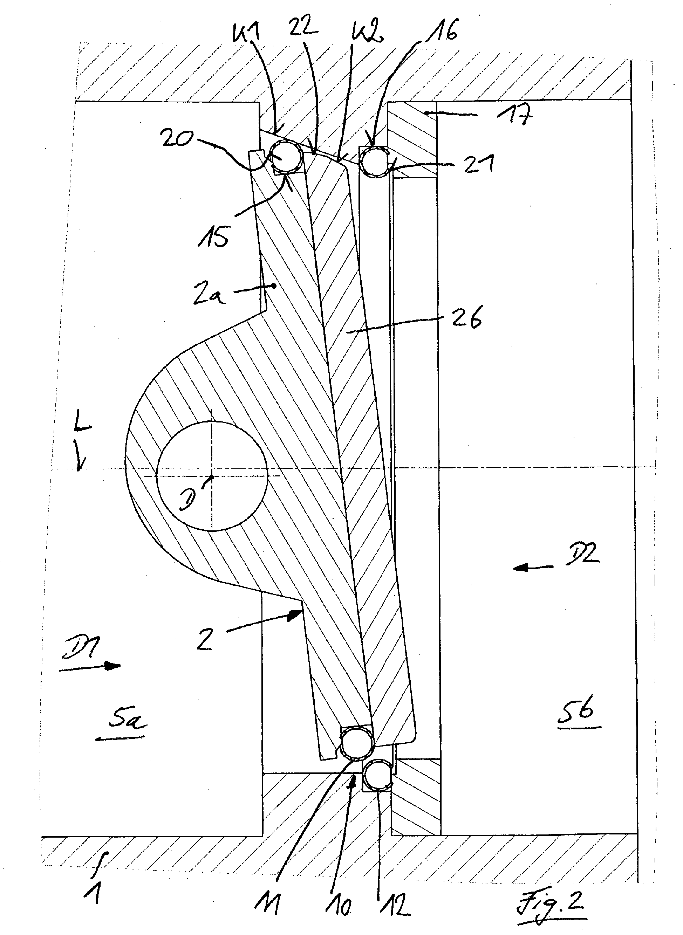

Wie aus der Figur 2 ersichtlich ist, ist die Klemmscheibe 2b nur im vorderen, stirnseitigen Teil mit der Kegelfläche K2 ausgebildet. Der hintere, der Drehachse D zugewandte Bereich 22 des Klemmscheibe 2b ist gegenüber der Kegelfläche K2 abgeflacht, um beim Öffnen und Schließen der Absperrscheibe 2 eine Kollision mit der Kegelfläche K1 im Gehäuse 1 zu vermeiden.

Beim Betätigen der Absperrscheibe 1 in die Sperrstellung schwenkt der an der Absperrscheibe 2 angeordnete Dichtring 11 - wie in den Figuren 2 und 3 verdeutlicht ist - an die Kegelfläche K1 des Gehäuses 2 und somit in den dreifach exzentrischen Gehäusesitz, während gleichzeitig die Absperrscheibe 2 mit der Kegelfläche K2 und somit mit der dreifach exzentrischen Scheibengeometrie an den im Gehäuse 1 angeordneten Dichtring 12 einschwenkt. Bei der erfindungsgemäßen Absperrarmatur sind somit die beiden Dichtringe 11, 12 über eine jeweils dreifach exzentrische Geometrie eingesetzt, so dass sich verschleißfreie Öffnungs- und Schließvorgänge der Absperrscheibe erzielen lassen.

Die einseitig offenen Dichtringe 11, 12 sind jeweils durch die entsprechende Einbaulage von dem in der zugeordneten Druckraum 5a, 5b anstehenden Druck dichtverstärkend beaufschlagt. Die Absperrscheibe 2 kann somit mit geringen Antriebsmomenten in die Sperrstellung betätigt werden, wobei die Dichtwirkung kein zusätzliches Antriebsmoment benötigt. Damit kann der Antrieb der Absperrscheibe 2 kostengünstig ausgelegt werden.

Die Erfindung ist nicht auf das dargestellte Ausführungsbeispiel beschränkt. Anstelle eines C- förmigen Profils der Dichtringe 11, 12 können die Dichtringe 11, 12 beispielsweise ein U-förmiges Profil aufweisen, wobei mit einem liegend ausgerichteten Einbau der Dichtringe 11, 12 die dichtverstärkende Beaufschlagung der Dichtringe 11, 12 von dem Druck in der entsprechenden Druckseite 5a, 5b erzielt werden kann.

## Patentansprüche

1. Absperrarmatur mit einem Gehäuse (1), einem zwischen einer Absperrscheibe (2) und dem Gehäuse (1) ausgebildeten Ventilsitz (V), wobei die Absperrscheibe (2) im Gehäuse (1) um eine senkrecht zur Längsachse (L) des Gehäuses (1) angeordnete Drehachse (D) zwischen einer Öffnungsstellung und einer Sperrstellung beidseitig drehbar gelagert ist, wobei an dem Ventilsitz (V) ein metallisches Dichtsystem (10) ausgebildet ist, das in beide Druckrichtungen (D1, D2) abdichtet, und wobei die Absperrscheibe (2) zweifach-exzentrisch in dem Gehäuse (1) gelagert ist, wobei eine erste Exzentrizität (E1) von einer Beabstandung der Absperrscheibe (2) von der Drehachse (D) in Längsrichtung der Längsachse (L) der Absperrarmatur gebildet ist und eine zweite Exzentrizität (E2) von einer seitlichen, senkrecht zur Längsachse (L) angeordneten Beabstandung der Drehachse (D) der Absperrscheibe (2) von der Längsmittelachse (L) des Gehäuses (1) gebildet ist, und eine dritte Exzentrizität (E3) von einem kegelförmigen Ventilsitz (V) gebildet ist, wobei die Kegelspitze von der Längsachse (L) des Gehäuses (1) beabstandet ist, **dadurch gekennzeichnet, dass** das metallische Dichtsystem (10) von zwei metallischen Dichtringen (11,12) gebildet ist, wobei ein Dichtring (12) im Gehäuse (1) und ein weiterer Dichtring (11) an der Absperrscheibe (2) angeordnet ist.

2. Absperrarmatur nach Anspruch 1, **dadurch gekennzeichnet, dass** an dem Gehäuse (1) eine Kegelfläche (K1) des Ventilsitzes (V) und an der Absperrscheibe (2) eine Kegelfläche (K2) des Ventilsitzes (V) ausgebildet ist, wobei in der Sperrstellung der Absperrscheibe (2) der an der Absperrscheibe (2) angeordnete Dichtring (11) mit der Kegelfläche (K1) des Gehäuses (1) zusammenwirkt und der im Gehäuse (1) angeordnete Dichtring (12) mit der Kegelfläche (K2) an der Absperrscheibe (2) zusammenwirkt.

3. Absperrarmatur nach Anspruch 1 oder 2, **dadurch gekennzeichnet, dass** der an der Absperrscheibe (2) angeordnete Dichtring (11) zu einer ersten Druckrichtung (D1) abdichtet und der im Gehäuse (1) angeordnete Dichtring (12) zu einer zweiten Druckrichtung (D2) abdichtet.

4. Absperrarmatur nach einem der Ansprüche 1 bis 3, **dadurch gekennzeichnet, dass** der Dichtring (D1; D2) jeweils zu der zugeordneten Druckrichtung (D1; D2) offen ist, so dass der anstehende Druck dichtverstärkend wirkt.

5. Absperrarmatur nach einem der Ansprüche 1 bis 4, **dadurch gekennzeichnet, dass** die Dichtringe (11; 12) als einseitig offene Dichtringe ausgebildet sind.

6. Absperrarmatur nach einem der Ansprüche 1 bis 5, **dadurch gekennzeichnet, dass** die Dichtringe (11; 12) im Querschnitt ein C-Profil oder ein U-Profil aufweisen.

7. Absperrarmatur nach Anspruch 6, **dadurch gekennzeichnet, dass** ein als C- oder U-förmiger Dichtring (11; 12) mit einer Querschnittsaussparung (20; 21) zur zugeordneten Druckseite (D1; D2) hin offen eingebaut ist.

8. Absperrarmatur nach einem der Ansprüche 1 bis 5, **dadurch gekennzeichnet, dass** die Dichtringe (11; 12) als geschlossene, im Querschnitt O-förmige Dichtringe ausgebildet sind.

9. Absperrarmatur nach Anspruch 8, **dadurch gekennzeichnet, dass** die O-förmige Dichtringe (11; 12) jeweils zumindest eine Anschlussöffnung zur Verbindung des Innenraums des Dichtringes mit der zugeordneten Druckrichtung aufweisen.

10. Absperrarmatur nach einem der Ansprüche 1 bis 9, **dadurch gekennzeichnet, dass** die Absperrscheibe (2) einen zweigeteilten Aufbau aufweist, wobei der an der Absperrscheibe (2) angeordnete Dichtring (11) mittels einer Klemmbefestigung an der Absperrscheibe (2) befestigt ist.

11. Absperrarmatur nach einem der Ansprüche 1 bis 10, **dadurch gekennzeichnet, dass** der an dem Gehäuse (1) angeordnete Dichtring (12) an dem Gehäuse (1) mittels einer Klemmbefestigung befestigt ist.

## Claims

1. Shut-off valve with a housing (1), a valve seat (V) which is formed between a shut-off disc (2) and the housing (1), wherein the shut-off disc (2) is mounted in the housing (1) so as to be rotatable about an axis of rotation (D), which is arranged perpendicularly to the longitudinal axis (L) of the housing (1), between an open position and a blocking position, wherein a metallic sealing system (10) which seals in both pressure directions (D1, D2) is formed on the valve seat (V), and wherein the shut-off disc (2) is mounted with double eccentricity in the housing (1), wherein a first eccentricity (E1) is formed by a spacing of the shut-off disc (2) from the axis of rotation (D) in the longitudinal direction of the longitudinal axis (L) of the shut-off valve, and a second eccentricity (E2) is formed by a lateral spacing, which is arranged perpendicularly to the longitudinal axis (L), of the axis of rotation (D) of the shut-off disc (2) from the longitudinal centre axis (L) of the housing (1), and a third eccentricity (E3) is formed by a conical valve seat (V), wherein the cone tip is spaced apart from the longitudinal axis (L) of the housing (1), **characterized in that** the metallic sealing system (10) is formed by two metallic sealing rings (11, 12)., wherein one sealing ring (12) is arranged in the housing (1) and a further sealing ring (11) is arranged on the shut-off disc (2).

2. Shut-off valve according to Claim 1, **characterized in that** a conical surface (K1) of the valve seat (V) is formed on the housing (1) and a conical surface (K2) of the valve seat (V) is formed on the shut-off disc (2), wherein, in the blocking position of the shut-off disc (2), the sealing ring (11) arranged on the shut-off disc (2) interacts with the conical surface (K1) of the housing (1) and the sealing ring (12) arranged in the housing (1) interacts with the conical surface (K2) on the shut-off disc (2).

3. Shut-off valve according to Claim 1 or 2, **characterized in that** the sealing ring (11) arranged on the shut-off disc (2) seals with respect to a first pressure direction (D1) and the sealing ring (12) arranged in the housing (1) seals with respect to a second pressure direction (D2).

4. Shut-off valve according to one of Claims 1 to 3, **characterized in that** the sealing ring (D1; D2) is open in each case with respect to the associated pressure direction (D1; D2) such that the pressure which is present acts in a manner reinforcing the sealing.

5. Shut-off valve according to one of Claims 1 to 4, **characterized in that** the sealing rings (11; 12) are designed as sealing rings which are open on one side.

6. Shut-off valve according to one of Claims 1 to 5, **characterized in that** the sealing rings (11; 12) have a C profile or a U profile in cross section.

7. Shut-off valve according to Claim 6, **characterized in that** a C- or U-shaped sealing ring (11; 12) is installed with a cross-sectional recess (20; 21) open towards the associated pressure side (D1; D2).

8. Shut-off valve according to one of Claims 1 to 5, **characterized in that** the sealing rings (11; 12) are designed as closed, cross-sectionally 0-shaped sealing rings.

9. Shut-off valve according to Claim 8, **characterized in that** the O-shaped sealing rings (11; 12) each have at least one connecting opening for connecting the interior of the sealing ring to the associated pressure direction.

10. Shut-off valve according to one of Claims 1 to 9, **characterized in that** the shut-off disc (2) has a two-part construction, wherein the sealing ring (11) arranged on the shut-off disc (2) is fastened to the shut-off disc (2) by means of a clamping fastening.

11. Shut-off valve according to one of Claims 1 to 10, **characterized in that** the sealing ring (12) arranged on the housing (1) is fastened to the housing (1) by means of a clamping fastening.

## Revendications

1. Soupape d'arrêt comprenant un boîtier (1), un siège de soupape (V) réalisé entre un disque d'arrêt (2) et le boîtier (1), le disque d'arrêt (2) étant monté dans le boîtier (1) de manière à pouvoir tourner des deux côtés autour d'un axe de rotation (D) disposé perpendiculairement à l'axe longitudinal (L) du boîtier (1) entre une position d'ouverture et une position d'arrêt, un système d'étanchéité métallique (10) étant réalisé sur le siège de soupape (V), lequel système d'étanchéité réalise l'étanchéité dans les deux sens de pression (D1, D2), et le disque d'arrêt (2) étant monté dans le boîtier (1) de manière doublement excentrique, une première excentricité (E1) étant formée par un espacement du disque d'arrêt (2) de l'axe de rotation (D) dans la direction longitudinale de l'axe longitudinal (L) de la soupape d'arrêt et une deuxième excentricité (E2) étant formée par un espacement latéral, situé perpendiculairement à l'axe longitudinal (L), de l'axe de rotation (D) du disque d'arrêt (2) de l'axe médian longitudinal (L) du boîtier (1), et une troisième excentricité (E3) étant formée par un siège de soupape conique (V), le sommet du cône étant espacé de l'axe longitudinal (L) du boîtier (1), **caractérisée en ce que** le système d'étanchéité métallique (10) est formé par deux bagues d'étanchéité métalliques (11, 12), une bague d'étanchéité (12) étant disposée dans le boîtier (1) et une bague d'étanchéité supplémentaire (11) étant disposée sur le disque d'arrêt (2).

2. Soupape d'arrêt selon la revendication 1, **caractérisée en ce qu'**une surface conique (K1) du siège de soupape (V) est réalisée sur le boîtier (1) et une surface conique (K2) du siège de soupape (V) est réalisée sur le disque d'arrêt (2) et, dans la position d'arrêt disque d'arrêt (2), la bague d'étanchéité (11) disposée sur le disque d'arrêt (2) coopérant avec la surface conique (K1) du boîtier (1), et la bague d'étanchéité (12) disposée dans le boîtier (1) coopérant avec la surface conique (K2) sur le disque d'arrêt (2).

3. Soupape d'arrêt selon la revendication 1 ou 2, **caractérisée en ce que** la bague d'étanchéité (11) disposée sur le disque d'arrêt (2) réalise l'étanchéité par rapport à un premier sens de pression (D1) et la bague d'étanchéité (12) disposée dans le boîtier (1) réalise l'étanchéité par rapport à un deuxième sens de pression (D2).

4. Soupape d'arrêt selon l'une quelconque des revendications 1 à 3, **caractérisée en ce que** la bague d'étanchéité (D1 ; D2) est respectivement ouverte vers le sens de pression associé (D1 ; D2), de telle sorte que la pression présente agisse de manière à amplifier l'étanchéité.

5. Soupape d'arrêt selon l'une quelconque des revendications 1 à 4, **caractérisée en ce que** les bagues d'étanchéité (11 ; 12) sont réalisées sous forme de bagues d'étanchéité ouvertes d'un côté.

6. Soupape d'arrêt selon l'une quelconque des revendications 1 à 5, **caractérisée en ce que** les bagues d'étanchéité (11 ; 12) présentent en section transversale un profil en C ou un profil en U.

7. Soupape d'arrêt selon la revendication 6, **caractérisée en ce qu'**une bague d'étanchéité (11 ; 12) en forme de C ou en forme de U est installée avec un évidement de section transversale (20 ; 21) ouvert en direction du côté de pression associé (D1 ; D2).

8. Soupape d'arrêt selon l'une quelconque des revendications 1 à 5, **caractérisée en ce que** les bagues d'étanchéité (11 ; 12) sont réalisées sous forme de bagues d'étanchéité fermées, en forme de O en section transversale.

9. Soupape d'arrêt selon la revendication 8, **caractérisée en ce que** les bagues d'étanchéité en forme de O (11 ; 12) comprennent respectivement au moins une ouverture de raccordement pour la liaison de l'espace intérieur de la bague d'étanchéité avec le sens de pression associé.

10. Soupape d'arrêt selon l'une quelconque des revendications 1 à 9, **caractérisée en ce que** le disque d'arrêt (2) présente une structure en deux parties, la bague d'étanchéité (11) disposée sur le disque d'arrêt (2) étant fixée au disque d'arrêt (2) au moyen d'une fixation par serrage.

11. Soupape d'arrêt selon l'une quelconque des revendications 1 à 10, **caractérisée en ce que** la bague d'étanchéité (12) disposée sur le boîtier (1) est fixée au boîtier (1) au moyen d'une fixation par serrage.
